# EUROPEAN PATENT APPLICATION

(11) **EP 3 189 738 A1**
(43) Date of publication of application: **12.07.2017**
(21) Application number: 16150597.9
(22) Date of filing: 08.01.2016
(51) Int. Cl.: A23P 20/10, A23L 5/10, A23L 13/00, A23L 17/00

(54) **COATED FOOD PRODUCTS**

(71) Applicant: Crisp Sensation Holding S.A., 1208 Geneva (CH)
(72) Inventor: MICHIELS, Wilhelmus Johannes Gerardus, 6301 GS Nederweert (NL); METHORST, Roy, 4847 AA Teteringen (NL)
(74) Representative: Browne, Robin Forsythe

(57) **Abstract**

A method of manufacture of a microwave or thermally reheatable or cookable food product comprises the step of coating the product or ingredient or a component thereof with a coating composition comprising ethylcellulose.

## Description

This invention relates to food products, ingredients for food products and methods of manufacture of such products, particularly but not exclusively for food products which are frozen for storage before use and which are suitable for reheating or cooking from a frozen state using a microwave oven. Preferred products are in addition or alternatively suitable for reheating or cooking in a combination microwave-thermal oven, air fryer oven or in a thermal oven. The products may also be reheated or cooked by grilling or shallow or deep frying.

Many food materials, for example, natural muscle of poultry, fish or red meat or vegetable or processed foods contain a large percentage of water. Most fresh foods contain more than 60% water. Some of this water is bound, that is tightly attached to the constituent cells. The remaining mobile water is available and can be frozen. If a food product is frozen to a core temperature of between -1°C and -30°C or lower and is irradiated in a microwave oven, the microwave energy will be primarily absorbed by the frozen available water. Whereas in conventional cooking heat is applied from the exterior, in microwave cooking, heat is generated from within. The process of heating can be very rapid so that available water is converted into steam. When a food product is allowed to stand after heating in a microwave oven, water can continue to be expelled from the product. This is particularly noticeable for example when heating frozen fish muscle. The loss of water causes any food coating, particularly a batter, pastry or breadcrumb coating to become soggy and unpalatable. In addition the core of the substrate may become dry due to loss of water. A further problem arises due to accumulation of ice crystals on the exterior of a food product as it is frozen. Migration of water on storage or during thawing can detract from the crispness of the underlying coating.

Attempts have been made to regulate the escape of moisture during microwave heating by coating the product with a composition which forms an impermeable film. This is unsatisfactory because the natural distribution of water within the coated product is lost through the coating as steam due to internal pressure. Furthermore an impenetrable coating or film is detrimental to the taste and texture of the product.

WO2010/143067 discloses oleogels comprising anhydrous ethylcellulose surfactant and oil for use as a fat substitute. An object of the present invention is to provide low fat fried or other coated food products.

According to a first aspect of the present invention a method of manufacture of a microwave or thermally reheatable or cookable food product comprises the step of coating the product or ingredient or a component thereof with a coating composition comprising ethylcellulose.

The coating may be a partial or complete coating. A partial coating may be sufficient to reduce the water absorbing surface area of the product or ingredient.

Ethylcellulose is a polymeric material derived from the naturally occurring polymer cellulose. Ethylcellulose polymers are inert, have no caloric value and are virtually colourless, odourless and tasteless. Ethylcellulose polymers, for example manufactured under the trade mark ETHOCEL (trade mark of The Dow Chemical Company) are used for pharmaceutical applications but use in food products has been limited. The ethylcellulose may have a particle size in the range 30µm to 150µm, typically 30µm to 60µm. Use of a small particle size is preferred to reduce or prevent contamination of oil used for frying.

Ethylcellulose softens and becomes plastic at temperatures between 135°C to 160°C, dependent on the ethoxyl content. Ethylcellulose forms excellent films which are flexible even at low temperatures and therefore forms an excellent water barrier. Ethylcellulose has been used as a flavour fixative in encapsulation and as a vitamin coating.

The ethylcellulose may be used as a pure ingredient. Alternatively, additives may be employed to modify the surface properties of the ethylcellulose. For example, sorbitan monostearate or other surfactant may be added, particularly to reduce loss of oil from composites in which oil is present.

The method finds particular application in manufacture of fried coated products, microwaveable food products or thermally cookable or reheatable chilled products and ingredients or components for such products. The method may be used for manufacture of coated farinaceous substrates, for example multi-layer food products and snack foods.

The method also finds application in manufacture of food products which are frozen or chilled for storage, for example for extending the storage life of frozen chilled products.

Use of a coating of ethylcellulose may prevent moisture migration during storage of a frozen food product or ingredient or component of such a product. For example, moisture migration from the core of a frozen coated product may be reduced. The storage life of a cool-line product may be prolonged as less water is able to migrate to the outer layer causing sogginess of the crumb.

Products, ingredients or components manufactured in accordance with this invention have the advantage that their taste and texture properties may be improved in comparison to food products not including an ethylcellulose coating or intermediate layer, particularly after frozen storage and reheating or cooking, especially using a microwave oven, combined microwave and thermal oven or an air fryer. The products may also exhibit superior properties when used in chilled applications for products which are stored or displayed at ambient temperatures.

Improved properties may include one or more of crispness, crunchiness, hardness and brittleness. These properties contribute to the mouth-feel of a successful product.

A further advantageous property is that uptake of fats or oils during frying may be reduced, resulting in a food product with a lower fat content. For example, escape of moisture may be reduced, providing less of an opportunity for ingress of oil or fat. Also, the ethylcellulose coating layer may prevent or impede passage of frying oil into the core of the product, especially at lower cooking temperatures.

In a particularly advantageous method, a plurality of layers, preferably two layers, are applied successively to the substrate. The two layers may be the same or may have different compositions. Preferably, the first layer consists essentially of or comprises ethylcellulose. The second layer may comprise ethylcellulose with one or more additives as described below.

In a further advantageous embodiment a coated food product comprises a substrate and a plurality of layers applied successively to the substrate, one of said layers including ethylcellulose.

The product may be a fried product which may be frozen after frying for storage and reheating or cooking in a microwave or thermal oven prior to consumption.

For a fried product one or more outer layers may be applied onto the ethylcellulose containing layer. This serves to create a barrier to prevent or reduce release of the ethylcellulose into the frying oil. A build up of ethylcellulose in frying oil is undesirable and reduces the working life of the oil.

The outer layer may comprise a batter or aqueous coating layer and a coating crumb layer applied to the batter or aqueous coating layer.

In a preferred embodiment the method comprises the steps of:
providing a substrate core;
optionally applying a first aqueous coating to the substrate;
applying an inner coating layer comprising ethylcellulose, a particulate farinaceous component and, optionally, one or more further edible ingredients to form an ethylcellulose coated core;
applying a second aqueous coating to the ethylcellulose coated core;
applying a coating crumb to the core to form a breaded product;
frying the breaded product in heated oil to form a fried product and
freezing the fried product.

The farinaceous component may comprise a bonding crumb layer.

A breaded product which may be fried in heated oil to form a fried product may comprise:
a substrate core;
an optional first aqueous coating applied to the substrate core;
an inner coating layer comprising ethylcellulose, a particulate farinaceous component and, optionally, one or more further ingredients;
a second aqueous coating applied to the inner coating layer;
a coating crumb applied to the second aqueous coating to form a breaded product;
wherein the breaded produce may be fried in heated oil and frozen.

The frozen product may be heated or cooked in a microwave, thermal or combination microwave and thermal oven. An air fryer may be employed.

Without wishing to be bound by theory, it is believed that the composition comprising ethylcellulose and a particulate farinaceous material such as comminuted crumb or crumb fines may form a relatively hydrophobic layer containing relatively hydrophilic apertures to facilitate passage of water during reheating in a conventional thermal oven or a microwave oven. The layer may also impede moisture migration on storage in a freezer for example over a period of six weeks or longer.

The location of the ethylcellulose coating layer may be selected so that it is sufficiently remote from the outer surface of the product so that the frying oil does not significantly pick up the ethylcellulose as mentioned above. Also, the layer is preferably located sufficiently close to the surface that it reaches a temperature sufficient to liquefy the ethylcellulose without overheating the core or so that the outer coating layers are damaged by prolonged exposure to the frying oil. The weight and thicknesses of the layers may be determined in accordance with the particular application. The desired degree of heating of the core depends on the nature of the substrate and is easily determined by a person skilled in the art. For example, the substrate may be wholly or partially frozen, such as when manufacturing a coated fish product or a sauce filled product. Chicken or other meat products may lose moisture or their protein may be denatured if overheated during frying.

The invention is further described by means of example, but not in any limitative sense.

The inner coating layer preferably comprises;
ethylcellulose 1.1 to 2 wt% of the farinaceous component and optional further ingredients.

The preferred amount of ethylcellulose relates to the fat content of the coating after production, specifically the amount of fat in the coating in the contact with or adjacent the ethylcellulose. A preferred amount is equal to or greater than 15wt% ethylcellulose in combination with equal to or less than 85wt% of the glyceride component.

A preferred ratio of ethylcellulose to glyceride component is in the ratio of 1:32 to 1:4, preferably 1:5.6. An amount of the glyceride component greater than a ratio of 1:4 may result in loss of adhesion, bleeding of ethylcellulose into frying oil and chewiness of the finished coating.

Amounts of ethylcellulose used in a finished product depend on the pick up of crumb or other farinaceous component by the substrate and may vary within the range 1wt% to 20wt%.

The farinaceous component may be a finely divided crumb having a particle size less than about 1.5mm, more preferably less than about 1.0mm, typically less than 0.8mm. Fine dust is preferably absent from the farinaceous component. The presence of fine dust may be disadvantageous as it can lead to blockage of moist absorbent sites on the underlying substrate preventing adhesion of a coating. In addition, a dust layer can act as a sponge, promoting undesirable migration of liquid between a dough or pastry substrate and a filling. The crumb is preferably an extruded gum which has been coated with a hydrocolloid, preferably a natural gum, for example guar gum, manufactured in accordance with the disclosure of WO2010/001101, which is incorporated herein by reference for all purposes.

The further ingredients may comprise a glyceride, preferably a saturated or unsaturated triglyceride, more preferably vegetable oil in an amount 1wt% to 15wt%. Preferably a vegetable oil or fat which is solid at ambient temperature is employed. The vegetable oil is preferably added to the farinaceous coating material in order to prevent demixing of the components during manufacture.

The presence of a glyceride may facilitate liquefaction of the ethylcellulose to form a gel-like ethylcellulose containing composite which serves as a moisture barrier in the finished product. The use of such a component avoids the need for the ethylcellulose to contact frying oil during manufacture.

In an alternative or additional embodiment, ethylcellulose may be included as a powder in the second aqueous coating. This is particularly suitable when the outer crumb layer comprises two or more crumb layers or a larger crumb followed by an infill or smaller crumb product, so that the outer crumb layer provides a barrier to penetration of frying oil.

The ethylcellulose coating preferably comprises a thin homogeneous or continuous film extending over the surface of the coated substrate. Alternatively, the coating may comprise an intermittent film sufficient to impede moisture absorption by the substrate.

Percentages and other quantities referred to in this specification and claims are by dry weight, unless indicated otherwise. Percentages and other proportions are selected from any ranges quoted to total 100%.

According to a preferred aspect of the invention, a coating composition comprises ethylcellulose and a glyceride wherein the coating composition is solid or semi-solid at ambient temperature.

A method of manufacture of a food product may include the step of coating a substrate with a coating composition comprising ethylcellulose and a glyceride, wherein the coating composition is solid or semi-solid at ambient temperature.

Preferably the glyceride is a saturated or unsaturated triglyceride, particularly a vegetable oil. The vegetable oil is preferably solid at ambient temperature, for example palm fat. Preferred compositions comprise;

| | |
|---|---|
| ethylcellulose | 10-30wt%; |
| vegetable oil | 90-70wt% |
| | 100wt% |

A preferred composition comprises;

| | |
|---|---|
| ethylcellulose | 15wt% |
| vegetable oil | 85wt% |
| | 100wt% |

The coating may be created by spraying a substrate with vegetable oil which has been heated as necessary to form a sprayable liquid, adding ethylcellulose, optionally heating and allowing to cool. While this process may be used for many products, this process may be disadvantageous for products in which the liquid composition can flow downwardly due to gravity. This may result in poor coverage of the sides of a product such as a pastry base.

The coating may be applied to a substrate by heating an ethylcellulose-glyceride composition above a melting or softening temperature, followed by application of the melted composition by brushing or spraying.

Alternatively, when the ethylcellulose-glyceride composition is solid at ambient or working temperature, the solid composition may be comminuted and applied as particles, for example as a powder or dust. This may provide better coverage of the sides of a product.

The composition may be cooled or frozen to facilitate milling into a powder. Alternatively, the composition may be melted and cast into a film, cooled and broken into flakes or other particles. After warming to ambient or an elevated operating temperature, the flakes may be softened to make them more adherent to the food substrate.

In a particularly advantageous embodiment, the composition may be applied as a covering upon an outer surface of a food product to prevent or impede migration of moisture in chilled or frozen conditions.

According to a further aspect of the present invention, a surface protection layer for a chilled or frozen food product comprising ethylcellulose and optional further edible ingredients. The surface protection layer may comprise a combination of ethylcellulose and a glyceride which is solid or semi-solid at a storage or display temperature of the product.

The surface protecting layer may prevent migration of moisture from the interior to the exterior of a fried or cooked food product upon storage in cold conditions or when frozen. This serves to protect the surface from formation of a surface layer of ice or condensed water. Use of the coating composition may serve to reduce the cooking or reheating time of the product in a conventional thermal oven, a microwave oven, an air fryer or a combination of thermal and microwave oven.

According to a further aspect of the present invention, a thermal or microwave cookable or reheatable food product comprises a substrate coated with a coating comprising ethylcellulose and optional further ingredients.

The coating may comprise ethylcellulose and a glyceride as described above.

According to a further aspect of the present invention, a method of manufacture of a microwave or thermally cookable or reheatable food product comprises the steps of:
providing a substrate;
applying successive coating layers to the substrate, wherein the coating layers successively comprise in a direction from the substrate outwardly towards the surface of the coated product;
a first aqueous composition;
an inner particulate coating comprising ethylcellulose, a powdered farinaceous material and, optionally, a glyceride;
a second aqueous composition;
an outer crumb layer of coating crumb to form a breaded product;
frying the breaded product in heated oil to form a fried product; and
freezing the fried product.

The method preferably includes the step of allowing the frying oil to penetrate the outer crumb coating layer during frying and contact the inner particulate coating layer.

During frying water may escape from the substrate through the inner and outer coatings including the ethylcellulose/glyceride containing layer and pass into the frying oil. After removal from the fryer and cooling, the ethylcellulose/glyceride may solidify to form a solid or semi-solid barrier.

In a further preferred aspect of the present invention, the method comprises the steps of:
providing a food substrate;
applying a first solid phase component comprising ethylcellulose and optional further ingredients to the substrate;
applying a second component comprising a glyceride to the substrate, wherein the first and second components are in contact or in adjacent spaced relation;
heating the components to a temperature greater than about 130°C;
allowing the second component to mix with the first component to form a liquid coating layer comprising ethylcellulose and glyceride; and
allowing the coating layer to cool and form a solid or semi-solid composition.

The glyceride is preferably selected from glycerides which are solid or semi-solid at ambient temperature, for example palm fat.

The second component may be a solid phase component and may be mixed with the first solid phase component or provided separately as an adjacent coating layer, preferably outside the first solid phase component.

Provision of a second glyceride containing component adjacent the first solid phase component is particularly advantageous for products which are cooked or reheated in an air fryer or an oven. In contrast, products which are deep fried may use the frying oil to combine with the ethylcellulose to form a barrier layer.

Preferably the coating layer forms a complete coating on the substrate. Alternatively, the coating may have a density which is sufficiently low that the coating is incomplete, allowing escape of moisture through the coating during heating of the food product.

The first solid phase coating may further include a carrier. The carrier may comprise one or more ingredients of a food coating or part thereof. For example, a further ingredient may comprise a crumb or pre-dust layer applied to a substrate. The crumb or pre-dust layer may form a shell encasing the substrate. Alternatively, the carrier may comprise ingredients of a pastry or other farinaceous coating or base layer.

An advantage of the use of the method of the present invention is that the ethylcellulose contained in or comprising the first component is miscible when heated with the glyceride contained in or comprising the second component.

The ethylcellulose/glyceride mixture may form a solid, semi-solid or gel-like hydrophobic phase when allowed to cool. The hydrophobic phase may form a water resistant barrier which completely or partially prevents passage of moisture from the substrate into the outer coating layer of the food product. In this way the substrate remains succulent and the coating may remain crisp following reheating in a microwave oven.

The glyceride may be a food compatible oil, for example a saturated or unsaturated triglyceride, preferably a vegetable oil. Examples include peanut, olive, flax, palm, corn, canola or sunflower oils or mixtures thereof.

An amount of about 2 wt% to about 30 wt% of ethylcellulose may be combined with glyceride, preferably about 6 wt% to about 18 wt%, more preferably about 15 wt%.

The temperature to which the components are heated may be in the range of about 130°C to about 160°C. Higher temperatures may be used but there is a risk of discolouring the ethylcellulose. Any convenient temperature can be employed to solubilise the ethylcellulose in the glyceride to form a thermoplastic mixture. Preferably the temperature is high enough to solubilise the components within a period of up to 2 minutes, 30 seconds as used for frying microwaveable products.

Two or more coatings may be applied using the method disclosed above. Preferably two solid phase coatings may be employed.

A first solid phase coating may comprise ethylcellulose and glyceride. The first solid phase coating is preferably allowed to form an unbroken coating upon the substrate, for example for a pastry product.

It is preferred that neither the first aqueous coating, when present, or the second aqueous coating is a batter and should contain less than 10wt%, preferably less than 5wt%, of flour. Flour is most preferably not present in the aqueous coating. A batter may create a barrier preventing efficient heating and liquefaction of an underlying ethylcellulose layer and may also detract from the texture and overall taste of the product.

Percentages and other quantities referred to in this specification are selected from any ranges quoted to total 100%.

The primary aqueous coating liquid may contain at least 0.05 wt%, preferably 0.1-1 wt% of cellulose ether. The cellulose ether is preferably methyl cellulose.

The primary aqueous coating liquid may contain at least 0.03 wt%, preferably 0.05-1 wt% egg protein.

The primary aqueous coating liquid may contain at least 0.05 wt%, preferably 0.01-1 wt% of a gum selected from xanthan gum, guar gum, locust bean gum, carrageenan gum and combinations thereof. Use of xanthan gum is especially preferred.

The primary aqueous coating liquid may contain at least 0.1 wt%, preferably 0.15-2 wt% of modified starch.

The primary aqueous coating liquid may contain 0.5-19 wt% of a dispersed oil phase.

The primary aqueous coating liquid may contain at least 80 wt% water.

The secondary aqueous coating liquid may contain at least 0.05 wt%, preferably 0.1-1 wt% cellulose ether, preferably methyl cellulose.

The secondary aqueous coating liquid may contain at least 0.03 wt%, preferably 0.05-1 wt% egg protein.

The secondary aqueous coating liquid may contain at least 0.05 wt%, preferably 0.01-1 wt% of a gum selected from xanthan gum, guar gum, locust bean gum, carrageenan gum and combinations thereof. Use of xanthan gum is especially preferred.

The secondary aqueous coating liquid may contain at least 0.1 wt%, preferably 0.15-2 wt% of modified starch.

The secondary aqueous coating liquid may contain 0.5-19 wt.% of a dispersed oil phase.

The secondary aqueous coating liquid may contain at least 80 wt% water.

Preferably both the inner bonding crumb and the outer coating crumb comprise a milled farinaceous dough extrudate containing about 0.05 wt% to about 5 wt% of added hydrocolloid.

The term "added hydrocolloid" as used herein refers to hydrophilic polymers that are not naturally present in the farinaceous component of a dough extrudate and that are capable of increasing the viscosity of an aqueous medium to which they have been added. These hydrophilic polymers are suitably selected from naturally occurring gums.

The term aqueous coating refers to a coating which is applied in the form of an aqueous coating composition before frying. The coating is usually no longer aqueous after immersion in the frying oil.

Food products in accordance with this invention have the advantage that the fried coating may have a weight which forms a smaller proportion of the total weight and which may be thinner than a similar product having a batter coating layer. The coating may be crisper and may not exhibit the dough-like taste of a battered product.

An advantage of products in accordance with this invention is that they avoid a need for a relatively heavy and dough-like tasting outer coating.

Food products having a coating in accordance with this invention have a further advantage that the coating layer has high integrity and strength, reducing or preventing any tendency of a fluid filling or substrate such as a sauce to bleed through the coating during reheating, whether in a microwave oven or other oven or when served for consumption.

The uptake of the aqueous first or second coating liquid mixtures may be about 2wt% to about 12 wt% more typically about 7 wt% to about 8 wt% relative to the weight of the substrate.

Furthermore, oil absorption may be reduced resulting in a lower fat content of the fried product.

In a preferred embodiment the fried coating that envelops the core of the edible material has a weight equal to about 5wt% to about 85wt% of the food product, said coating comprising at least four coating layers, successively including from the inside to the outside of the fried coating: a primary aqueous coating, a bonding crumb layer, a secondary aqueous coating and a coating crumb layer,
preferably both the bonding crumb layer and the outer crumb layer contain at least 80wt% of a hydrocolloid containing milled farinaceous dough extrudate containing about 0.05wt% to about 5wt% of added hydrocolloid.

The first aqueous coating may comprise the following dry ingredients mixed with water:

| | |
|---|---|
| cellulose gum | 15-35wt% |
| modified starch | 15-35wt% |
| hydrocolloid | 20-30wt% |
| protein component | 10-20wt% |
| Total | 100wt% |

Preferably the first aqueous coating comprises:

| | |
|---|---|
| cellulose gum | 20-30wt% |
| modified starch | 20-40wt% |
| hydrocolloid | 20-40wt% |
| egg albumen | 10-30wt% |
| Total | 100wt% |

A particularly advantageous first aqueous coating composition comprises:

| | |
|---|---|
| cellulose gum | 25% |
| modified starch | 35wt% |
| xanthan gum | 25wt% |
| egg albumen | 15wt% |
| Total | 100wt% |

The dry ingredients may be dissolved in water to produce a viscous or gel-like solution. Typically the solution may contain 0.7% to 1.2%, preferably 1%, by weight of the dry ingredients.

The balance of the coating composition may be water, although vegetable oil, for example in an amount of 5wt% may be used as a heat transfer medium, allowing the coating to be heated to a higher temperature during frying.

A microwave susceptor may be added to one or both of the aqueous coating compositions. The microwave susceptor may comprise a microwave absorbing, reflecting or scattering salt selected so that the temperature of an adjacent coating or other foodstuff is increased upon irradiation with microwave energy. The susceptor may comprise an edible inorganic salt. An amount of about 1wt% to about 5wt% may be added to the aqueous coating composition wherein the aqueous composition contains a total of about 0.1wt% to about 2.0wt%, typically about 0.9wt%, of the above mentioned ingredients dissolved in water. Preferably the aqueous coating composition includes about 3wt% of the primary microwave susceptor.

The microwave susceptor is preferably an edible inorganic salt. A salt of calcium, magnesium, iron, zinc or copper may be used. Preferably iron, calcium or magnesium salt may be used. For example iron (III) phosphate or iron (III) sulphate is particularly suitable. Alternatively a calcium salt, for example calcium phosphate, carbonate or sulphate may be employed. A mixture of susceptor compounds may be used. Various microwave absorbing salts are described in WO2014/111402.

Various phosphates of these metals may be used, for example orthophosphates, pyrophosphates, polyphosphates or higher condensed phosphates. Alternatively carbonates, hydroxides or carboxylates such as citrates or gluconates may be employed.

A preferred primary susceptor is an iron salt, particularly iron (III) phosphate in an amount of about 1wt% to about 5 wt%, preferably aboutlwt% to about 3wt% of the weight of the aqueous coating.

Use of an iron salt as a susceptor in the primary coating has been found to yield an overall crisper coated product.

The primary and secondary aqueous coating solutions may be applied to the substrate pieces using tempura dippers. An air knife or other air blower may be provided for removing any excess liquid from the coated substrate pieces.

Application of a coating of bonding crumb is facilitated by the use of the primary aqueous coating liquid since the crumb particles may not adhere sufficiently to a dry substrate. The application of the primary aqueous coat additionally offers the advantage that it may reduce loss of moisture and uptake of oil by the substrate during frying due to stabilising properties of the aqueous composition. Use of a conventional flour or breadcrumb based predust in place of the aqueous composition would not cause the crumb to adhere sufficiently to the substrate and would confer absorbent properties rather than moisture resistance which is desired to be achieved by the present invention.

The aqueous primary or secondary coating liquids preferably have a minimum viscosity of 300 cP, measured using a Brookfield viscometer with a number 3 spindle at 60 rpm at 10°C. More preferably, the viscosity lies within the range of 350-450 cP, more preferably in the range of 380-420 cP.

The farinaceous component or bonding crumb composition preferably comprises a crumb formed from a dough which has been co-extruded with a gum, as disclosed in WO 2010/001101, the disclosure of which is incorporated herein by reference for all purposes.

The farinaceous component or bonding crumb may have a dimension less than 0.8mm.

The farinaceous component or bonding crumb may be provided as a component of a bonding crumb composition which comprises the extruded crumb together with a polyglucose component and optional further ingredients. A preferred polyglucose component is maltodextrin, although a mixture of maltodextrin and polydextrose may be used. An amount of about 1wt% to about 15wt%, of polyglucose component, preferably about 7wt% to about 13wt.%, more preferably about 10w.% may be employed. The bonding crumb composition may comprise about 70 wt% to about 90wt%, preferably about 75wt% to about 85wt%, typically 81wt% of the extruded crumb by dry weight.

In preferred embodiments the farinaceous component or bonding crumb composition further comprises a secondary microwave susceptor compound. The susceptors disclosed above may be employed. Use of calcium phosphate is preferred. An amount of the secondary microwave susceptor compound of about 1wt% to about 10wt%, preferably about 4wt% to 8wt%, more preferably about 6wt% may be used.

The first aqueous coating composition may further comprise a pH adjuster, for example sodium carbonate. A typical amount may be about 2wt%. The pH of the composition may be between pH4 and pH7, typically about pH 5.

The farinaceous component or bonding crumb composition may further include an oleophilic carrier mixed with the crumb particles, for example an edible oil, preferably a vegetable oil in an amount of about 1wt% to about 5 wt%, preferably about 2 wt%.

The weight of the farinaceous component or bonding crumb composition may be 5-15wt%, preferably 6-10wt%, for example about 8wt% relative to the weight of the substrate.

The farinaceous component or bonding crumb composition may be applied as particles or as a powder using a conventional crumb applicator so that the composition, when applied, forms a complete shell covering the entire surface of the substrate.

The second aqueous coating may comprise an aqueous mixture of water and the following ingredients by dry weight:

| | |
|---|---|
| cellulose gum | 15-35wt% |
| modified starch | 15-35wt% |
| hydrocolloid | 20-30wt% |
| protein component | 10-20wt% |
| | 100% |

The ingredients may be combined in water to provide a solution containing about 0.7wt% to about 1.2wt%, preferably about 1.0wt%, of solids in an aqueous solution.

Preferably the secondary aqueous coating comprises:

| | |
|---|---|
| cellulose gum | 20-30wt% |
| modified starch | 20-40wt% |
| hydrocolloid | 0-40wt% |
| egg albumen | 10-30wt% |
| | 100% |

A particularly advantageous secondary coating composition comprises

| | |
|---|---|
| cellulose gum | 25wt% |
| modified starch | 35wt% |
| xanthan gum | 25wt% |
| egg albumen | 15wt% |
| | 100% |

Vegetable oil in an amount of about 1wt% to about 10wt%, preferably about 5wt%, may be added to the coating solution.

A secondary microwave susceptor may be added to the secondary coating composition. An amount of about 2wt% to about 10wt%, preferably about 6wt%, may be employed. The secondary susceptor may be selected from the susceptor compounds disclosed above. Preferably the secondary susceptor is a calcium salt, especially calcium phosphate.

The pickup of the secondary coating composition may be about 8wt% to about 16wt%, typically about 12wt% of the weight of the bonding crumb coated portion.

Any excess of the aqueous coating composition may be removed using an air knife or other blower.

One or more layers of outer crumb may be applied to the secondary coating.

In preferred embodiments of this invention the formulations consist essentially of the ingredients recited, in the sense that any additional ingredients are not present in a sufficient amount to affect the essential properties and characteristics of the product. In further embodiments the products consist only of the recited ingredients.

Use of a process in accordance with this invention confers several advantages particularly in comparison to conventional battered and crumbed products. The breaded crust may be lighter and thinner than for a battered product. For example the weight of the crumb may be from about 10% to about 20%, typically about 15%, of the weight of a battered coating. The reduced amount of crust results in a reduced amount of starch providing a less starchy taste, allowing the flavour and texture of the crumb and substrate to be more readily appreciated by a consumer.

The fried coating on one side of the present food product preferably has an average thickness of 1 to 8 mm, more preferably of 1.5 to 5 mm, and most preferably of 1.8 to 4 mm.

The invention provides a microwaveable frozen product, that is a product which has been cooked before freezing and which can be reheated in a microwave or combination microwave/thermal oven to give a satisfactory product with a succulent core and crisp crumb coating. Products of this invention may be also reheated using a conventional thermal oven.

The core of cooked edible material preferably has a weight equal to about 50wt% to about 95wt.% and the fried coating has a weight equal to about 5wt% to about 50wt% of the total weight of the food product.

The benefits of the present invention are particularly evident in embodiments in which the core of edible material contains an appreciable amount of water. During microwave reheating in particular, some of the water contained in the core of the product will turn into steam. Although we do not wish to be bound by theory, it is believed that the fried coating of the present product is permeable to the steam that is generated within the core of the product, but it hardly absorbs any of the steam, thus retaining its crisp nature. Typically the core of edible material contains at least 15wt%, more preferably at least 25wt%, and most preferably at least 30wt% water. The water content of the core material normally does not exceed 90wt%.

The coated food product of the present invention is suitably prepared by frying the product for a sufficiently long time to ensure that the edible material that makes up the core is fully cooked. The fried product may be further cooked in an oven if necessary, for example for large or bulky products to achieve a fully cooked product. Thus the product can simply be reheated in a microwave without the need for further heating for a sufficiently long period as may be necessary to completely cook it. The product of this invention may withstand such a prolonged period of frying without detriment. In contrast, conventional coated products may be damaged by prolonged frying.

The use of a hydrocolloid-containing milled dough extrudate in both the farinaceous component or bonding crumb and the coating crumb coating offers a further advantage that, together with the aqueous coating layers, these crumb coatings form a shell which may act as a barrier to penetration of oil into the core of the portion during the prolonged period of frying. Thus, the two crumb layers made of the aforementioned milled dough extrudate produce a fully cooked fried product having a relatively low fat content. Surprisingly, this lower fat content has virtually no adverse effect on the eating quality of the coated food product that is obtained by the present method. Typically, the fried coating of the coated food product has a fat content that is substantially lower, for example at least 10% lower, than that of a coated food product that is identical except for the fact that it was prepared using ordinary crumb. Preferably, the coating has a fat content of less than 20w.%, more preferably a fat content of about 2wt% to about 15wt%, and most preferably of about 4wt% to about 12wt%. Here the term fat refers to lipids selected from; triglycerides, diglycerides, monoglycerides, free fatty acids, phospholipids and mixtures thereof.

The coating of the present food product possesses unique properties. Not only does this coating absorb little fat during frying, but it also may absorb a reduced amount of water. Furthermore, the fried coating may be very stable in the presence of humidity. This special quality explains why steam that is produced during microwave reheating of the edible core can escape from the product without causing the fried coating to become unacceptably soggy. Thus, the fried coating of the present food product typically has a water content of not more than 10wt%, more preferably of not more than 5wt%, after microwave reheating. Here the water content refers to the water content after microwave reheating to a core temperature of 80°C.

The milled extrudate that is contained in the inner crumb layer typically has a mass weighted average particle size of less than 2 mm. More preferably, the milled extrudate in the inner crumb layer has a mass weighted average particle size of less than 1.8 mm, more preferably 0.1 to 1.5 mm, even more preferably 0.15 to 1 mm, and most preferably 0.25 to 0.9 mm.

Typically, the inner farinaceous component or crumb layer has a weight of 1-20% of the weight of the fried product. Even more preferably, the inner farinaceous component or crumb layer represents about 2wt% to about 10wt% most preferably about 3wt% to about 8wt% of the fried product.

The particle size distribution of the crumb and the milled extrudate can suitably be determined by use of a set of sieves of different mesh sizes in a manner well-known to a person skilled in the art.

The milled extrudate that is employed in the inner crumb layer preferably contains not more than a minor amount of particles having particle size in excess of 1.5 mm. Preferably, not more than 5wt% of the milled extrudate comprised in the inner crumb layer has a particle size of more than 1.5 mm, preferably of more than 1.2 mm.

The milled extrudate that is contained in the coating crumb layer preferably has a mass weighted average particle size of 0.5 to 3 mm, more preferably 1 to 3 mm.

The farinaceous component and outer coating crumb layers of the frozen, microwaveable product may contain minor amounts of other farinaceous material besides the milled farinaceous dough extrudate. An inner farinaceous layer preferably contains at least 80w.%, most preferably at least 90wt% of the milled farinaceous dough extrudate. Likewise, the outer crumb layer may contain at least 80wt%, most preferably at least 90wt%, of the milled farinaceous dough extrudate. In preferred embodiments no other crumb materials are present in order to maximise the moisture resistance of the coating.

Typically, the outer coating crumb layer has a weight equal to about 3wt% to about 25wt% of the weight of the fried product. Even more preferably, the coating crumb layer has a weight of about 5wt% to about 15wt%, most preferably of about 8wt% to about 12wt% of the fried product, said percentages being dependent on the shape and dimensions of the product.

The milled extrudate that is employed in the coating crumb layer preferably contains not more than a small amount of fines. Typically, not more than 5wt% of the milled extrudate in the outer crumb layer has a particle size less than 0.5 mm, preferably less than 0.8 mm. The absence of fines or dust allows complete coating of the substrate surface with crumb of the desired particle sizes. The presence of fines or dust may prevent or reduce adhesion of the desired crumb onto the substrate by coating the surface thereof.

Microwaveable products of particularly good quality can be obtained by employing a relatively fine milled extrudate in the farinaceous component layer and a relatively coarse milled extrudate in the outer coating layer. Accordingly, in an especially preferred embodiment of the present food product, the milled extrudate that is contained in the coating crumb layer has a mass weighted average particle size that is at least 50% higher, more preferably at least 100% higher and most preferably 200% to 500% higher than the mass weighted average particle size of the milled extrudate that is contained in the bonding crumb layer.

The hydrocolloid used in the milled extrudate may be any hydrocolloid which forms a gel or otherwise increases viscosity when mixed with water. Preferred hydrocolloids produce a milled extrudate which retains shape when stirred in water having a temperature of 20°C for a period of 60 seconds. Use of a hydrocolloid may provide a degree of water resistance to the milled extrudate reducing any tendency to pick up moisture. Typically, hydrocolloid is contained in the milled extrudate in a concentration of about 0.06wt% to about4 wt%, more preferably about 0.08wt% to about 3wt% and most preferably about 0.1wt% to about 3wt%.

Examples of hydrocolloids that may be used in the farinaceous dough extrudate of the inner and outer crumb layers include: natural gums, modified gums, pectin, alginate, arabinogalactan, agar, carrageenan, furcellaran, xanthan and combinations thereof. Preferably, the hydrocolloid is selected from natural gums and combinations thereof. Use of gelatin or starch is not preferred as these do not impart moisture resistance to the product.

Examples of natural gums that may suitably be employed as a hydrocolloid in the milled farinaceous dough extrudate include; guar gum, xanthan gum, locust bean gum, gum Arabic, tragacanth, gum karaya, gum ghatti, xanthan gum and combinations thereof.

Most preferably, the hydrocolloid is selected from: guar gum, locust bean gum, xanthan gum and combinations thereof.

Advantageously, the milled extrudates employed in the farinaceous component or bonding crumb and in the coating crumb have the same composition.

The farinaceous component or bonding crumb, where present, and coating crumb are preferably dried to a low water content before use, for example below 2wt%, preferably below 1.5wt%, more preferably below 1.3wt%.

A suitable drying process is disclosed in EP-B-2606745, the disclosure of which is incorporated into this specification by reference for all purposes.

The edible material contained in the core of the coated food product suitably comprises fish, meat, poultry, shellfish, shrimps, dairy products (e.g. cheese), ragu, vegetable, fungi and combinations thereof. According to a particularly preferred embodiment animal material selected from fish, meat, poultry, shellfish, shrimps and combinations thereof represents at least 40wt%, even more preferably at least 60wt% and most preferably at least 80wt% of the core of edible material.

The portions of solid substrate may contain at least 30wt%, preferably at least 50wt%, of animal tissue.

The core of edible material may have a thickness not greater 50 mm, preferably of not more than 15 mm, more preferably of not greater than 10 mm. This conveniently allows sufficient penetration of microwave radiation within a period of 2 to 3 minutes using the power available in a typical domestic microwave oven.

The portions of solid or solidified substrate that are coated with the aqueous precoating liquid may be solid at ambient temperature or, alternatively, they may be liquid or paste-like at ambient temperature. In the latter case, that is if the substrate is not solid at ambient temperature, the substrate is cooled to a sufficiently low temperature to render it solid, before applying the precoating liquid.

The present method may suitably be used to produce coated food products from portions of solid substrate have a weight in the range 5-300 g. Preferably, the portions of solid substrate have a weight in the range of 10 to 50 g.

The portions of the substrate may be whole portions, for example whole muscle portions such as individual steaks or fillets or larger pieces which may be cut into individual portions after cooking or reheating. Alternatively the pieces may comprise chopped or comminuted pieces, for example, nuggets or minced products which may be pressed or otherwise reconstituted into larger portions. Use of pieces with uniformly sized and weighted cores is preferred.

The solid or solidified substrate may be extruded using a die to form individual portions delivered, for example, on a wire mesh conveyor. The temperature of the extruded portions may be in the range of -6 to 6°C preferably of -4 to -1°C to stiffen the substrate to facilitate handling during the subsequent processing steps.

The substrate, especially if it is composed of chopped or comminuted pieces, is preferably impregnated with an aqueous or particulate stabiliser composition, for example by soaking, permeation or injection (for example vacuum pulse injection) into the substrate prior to forming into portions. Examples of suitable stabiliser compositions can be found in WO 97/03572, the disclosure of which is incorporated herein by reference for all purposes. The substrate may be impregnated with the stabiliser composition to the extent that the ingredients are distributed throughout the substrate or impregnate the bulk of the substrate structure. Impregnation may be achieved by soaking, permeation or injection into the substrate prior to forming into portions.

The present method may suitably employ a crumb coating apparatus that comprises a first endless conveyor and a second endless conveyor located below the downstream end of the first conveyor, and beneath a flow of fine crumb particles so that portions fall from the first conveyor onto a layer of particles on the second conveyor. The second conveyor may pass through a curtain of fine crumb falling onto the conveyor surface so that the portion falls onto the crumb causing the crumb to adhere to the surface layer of the aqueous precoating, and is then coated by the falling curtain of crumb particles. The apparatus may comprise a dispenser having an outlet extending across of the conveyor to provide the curtain of fine crumb extending across the path of the portions on the conveyor. A roller may be located above the conveyor on the exit side to bear on the coated portion to improve adhesion of the fine crumb.

Crumb may be applied in excess to the portion using a crumb applicator for example a Crumb Master (trade mark of GEA). The crumb coated portion may be passed through a roller to improve adhesion.

The total amount of aqueous precoating liquid, batter and crumb that is applied onto the portion in the present method is preferably such that, after frying, the fried portion has a weight that exceeds the weight of the uncoated portion of solid substrate by 25-100%, preferably by 30-60%.

The breaded portion may be fried to cook the substrate and coating layers. The period of cooking is preferably sufficient to completely cook the substrate preventing any health risk in the event that a frozen product is insufficiently reheated from the frozen state in a microwave oven. A comparatively long period of reheating in a microwave oven is undesirable since the substrate is heated from the inside by the microwave energy resulting in a loss of moisture. This may lead to a dry core and damage to the coating layers.

A homogeneous outer crumb coating, with none of the underlying batter layer being exposed is advantageous to provide a uniformly browned appearance after a prolonged period of frying. This may be compared to a product obtained after a shorter period of frying as commonly used for conventionally thermally cooked breaded products.

The bonding crumb that is bound by the aqueous precoating may form a stabilising thermal barrier underlying the secondary coating layer and the second coating of crumb may provide a barrier to escape of moisture and ingress of oil during a prolonged frying stage. The coating layers may also serve to protect the surface of the substrate from excessive local heating during frying.

For conventional thermally cooked breaded products such as chicken nuggets, a short period of frying, for example 90 seconds or less, has been followed by a further period of cooking in a hot air oven. This is disadvantageous for microwave cookable products because the core of the substrate may not be thoroughly cooked during reheating from the frozen state. Prolonged heating of conventional products in a microwave oven leads to excessive loss of moisture and consequent damage to the coating layers.

During the frying step the breaded portion, optionally after having been coated with one or more additional crumb layers, is preferably contacted with the hot oil for 120-300 seconds, more preferably for 130-240 seconds, most preferably for 140-180 seconds. A typical frying time is 150 seconds.

The hot oil that is used for frying the breaded portion preferably has a temperature of 160-200°C, more preferably 170-195°C and most preferably 180-185°C.

The oil employed preferably is a vegetable oil. The term "vegetable oil" encompasses non-modified vegetable oils, hydrogenated vegetable oils, fractions of vegetable oils (for example olein or stearin fractions), interesterified vegetable oils and combinations thereof.

Preferably the core temperature of the fried portion after frying is greater than 72°C, more preferably greater than 74°C.

Frying in accordance with this invention is advantageous in comparison to flash frying followed by hot air cooking as the latter may not give a coating with desired hardness without moisture loss from the core. However a hot air oven such as an oven belt cooker, may be used to further cook larger products in cases where the frying time is insufficient to fully cook the products, for example for bone-in products or whole muscle products such as chicken breast fillets.

The breaded portion is suitably fried by immersing the breaded portion in the hot oil, for example by passing it through a bath of hot oil by means of a conveyor belt. The frying apparatus preferably comprises a double layer of parallel endless belts both layers passing beneath the oil surface, a portion carried on the lower layer being prevented from floating during frying by contact with the upper layer. The belts may comprise wire screens or other perforated configurations.

It has been found that in order to produce a frozen coated food product that, although it comprises a moist core, can be heated in a microwave or combination oven to yield a ready-to-eat hot product with a crunchy coating, the freezing conditions employed in the process are important. More specifically, it has been found that the core temperature of the fried coated portion should be reduced very quickly after frying, that is it is inserted quickly into the freezer. when the core temperature of the fried portion is still high. Although we do not wish to be bound by theory, it is believed that rapid freezing of the fried portion wherein the dwell time between frying and introduction into the freezer is short enhances the structural integrity of the product, reduces formation of ice crystals and reduces the size of any ice particles which may be formed within the products. If ice crystals are present in a battered breaded product they can become superheated in a microwave oven creating hot spots in the core. Also migration of ice crystals on storage can lead to a build up of localised ice which on heating can result in release of excessive moisture near to the surface coating.

This may be contrasted with conventional processes wherein fried products are allowed to cool before introduction into a freezer. The fried portions are preferably introduced into the freezer after a period of less than 10 minutes, preferably less than 5 minutes after removal from the freezer.

In a particularly preferred embodiment of the present method, the fried coated portion that is produced by frying of the breaded portion has a core temperature in excess of 70°C and is frozen by introducing said fried portion into a freezer before the core temperature of the fried coated portion has fallen to a temperature of 50°C, and said core temperature is reduced in the freezer to less than -15°C, using cryogenic freezing.

In accordance with a particularly preferred embodiment, the fried coated portion has a core temperature of more than 65°C, preferably of more than 70°C, when it is introduced into the freezer.

The cryogenic freezing of the fried coated portion in the present method suitably comprises contacting said fried portion with a liquid gas, more preferably a cryogen, especially liquid nitrogen.

According to a particularly preferred embodiment, the fried portion has a core temperature of at least 50°C, more preferably of at least 60°C, even more preferably of at least 65°C and most preferably of at least 70°C when it is contacted with the liquid gas.

Preferably, the fried portion is contacted with a liquid gas until the core temperature of the portion is less than -15 °C, more preferably less than -20°C and most preferably less than -22°C.

The core temperature of the fried coated portion preferably does not decrease by more than 25°C, more preferably by not more than 20°C and most preferably by not more than 15°C before the fried portion is placed in the freezer, more preferably before it is contacted with liquid gas.

The frozen products may be suitably packaged for storage and distribution. Packaging under an inert atmosphere, for example nitrogen, is preferred.

The frozen product may be reheated or cooked from the frozen state before use using an oven selected from: a microwave oven, a conventional oven or grill, deep or shallow fried, or an oven using a combination of microwave and conventional heating.

The invention is further described by means of example, but not in any limitative sense.

### Example 1.

Palm oil (700g) was heated to 160°C and ethyl cellulose (300g Ethocel Premium 100 FP) was added with stirring over a period of 10 secs. Stirring was continued for 3 min until the ethyl cellulose had completely dissolved to give a clear liquid.

A portion of the solution (100g) was poured onto a cold plate and allowed to stand in a refrigerator at 0°C for 30 min. The composition formed a solid sheet which was broken into flakes with a dimension of 1-3mm. On warming to ambient temperature the flakes remained solid but became sticky when warmed to 100°C. On warming to 110°C the flakes became liquid. The product was a colourless rubbery solid which was insoluble in water.

The procedure was repeated using the following mixtures:
1. Ethyl cellulose 4g palm oil 96g
   On cooling the viscosity increased but the composition was a clear liquid at room temperature.
2. Ethyl cellulose 7g palm oil 93g
   On cooling to room temperature the composition was a clear gel.
3. Ethyl cellulose 14 g palm oil 86g
   On cooling to room temperature a clear solid composition was formed.
4. Ethyl cellulose 20g palm oil 80g
   On cooling to room temperature a clear solid composition was formed.
5. Ethyl cellulose 30g palm oil 70g
   On cooling to room temperature a clear solid composition was formed.

### Example 2.

The procedure of Example 1 was repeated using the following vegetable oils in place of palm oil:
sunflower, peanut, flax seed, olive, corn, canola.

The resultant compositions had similar properties to those obtained in Example 1.

### Example 3.

A baked warm pastry base of 10 cm was placed on a tray. A composition comprising 15% ethylcellulose and 85% palm oil obtained using the method of Example 1 was applied using a sieve. The base was heated for 2 min 30 secs at 180°C in an oven. The product was left to cool to room temperature before adding a quiche filling (50g) comprising a creamy chicken filling with fresh onions and peas topped off with grated cheese. The product was stored for 15 days at 4°C. The product was heated in an oven for 12 mins at 180°C. The resultant product using the composition of Example 1 gave a base which was crisp and hard.

### Comparative Example 1

The procedure of Example 3 was repeated without addition of the ethyl cellulose/oil composition.

A baked warm pastry base (10 cms) was placed on a tray. The base was heated for 2.30 minutes at 180° in an oven. The product was left to cool to room temperature before adding 50 grams of quiche filling comprising a creamy chicken filling with fresh onions and peas topped off with grated cheese. The product was stored for 15 days at 4°C. The product was heated in an oven for 12 minutes at 180°C. The base of the product was soggy and chewy.

### Example 4.

A warm baked pastry base (10 cms) was placed on a grid and sprayed with palm oil (9g) using a domestic sprayer. Finely powdered ethyl cellulose (3g) was applied using a sieve. The base was then heated for 8 mins at 180°C in an oven. The base was allowed to cool and the creamy chicken filling of Example 3 was added. The same storage conditions were used as in Example 3, following which the product was heated at 180°C for 12 mins. The dough was crispy and hard and the filling was creamy and pleasant to taste.

### Comparative Example 2.

The procedure of Example 4 was repeated without use of ethyl cellulose.

A baked warm pastry base (10 cms) was placed on a grid and heated for 8 mins at 180°C in an oven. The base was allowed to cool and the same creamy chicken filling as in Example 3 was added. The storage condition was the same as for Example 4. The product was heated at 180°C for 12 mins. The pastry base was soggy and chewy in texture.

### Example 5.

A baked warm pastry base (10 cms) was placed on a grid and brushed with the melted composition of Example 3 using 15% ethyl cellulose and 85% palm oil. The base was then allowed to cool and the same creamy chicken filling of Example 3 was added. The storage conditions were the same as for Example 3. The products were heated at 180°C for 12 mins. The dough was crispy and hard and the filling was creamy and had a pleasant texture.

### Comparative Example 3

The procedure of Example 5 was repeated without use of ethyl cellulose.

A warm baked pastry base (10 cms) was placed on a grid and brushed with a melted composition of Example 3. The base was then allowed to cool and the chicken filling of Example 3 was added. The storage conditions were the same as for Example 3. The products were heated at 180°C for 12 mins. The dough was soggy and chewy in texture.

### Example 6: Stabiliser Composition

A stabiliser composition was prepared using the following ingredients:-

| Ingredient | % |
|---|---|
| cellulose gum (Methocel™ A4M) | 15.0 |
| modified starch (Thermflo™) | 24.0 |
| polydextrose | 40.0 |
| xanthan gum | 6.0 |
| egg albumen | 15.0 |
| Total | 100.0 |

The composition was dissolved in water to produce a solution with a concentration suitable to stabilise the particular substrate in use. To this end the dry powder mixture was partially hydrated in a tub and then poured into a bowl chopper. The bowl chopper was then run for two to three minutes until the mixture was fully hydrated. The mixture can be hydrated directly in the bowl chopper if required. Alternatively, the stabiliser may be hydrated using a high shear mixer fitted with a general purpose head.

### Example 7 - Impregnation of Substrate with Stabiliser Composition

A chicken mixture for chicken dippers or nuggets was prepared with the following composition which was prepared as a dry mixture, as an alternative to use of a hydrated stabiliser composition. The stabiliser of Example 6 was used.

| Ingredient | % |
|---|---|
| chicken emulsion | 20% |
| skin - 3mm | 18% |
| chicken breast-10mm | 50% |
| water | 2% |
| rusk | 2% |
| stabiliser (Example 6) | 5% |
| seasoning | 3% |
| | 100% |

The chicken breast was chilled to -3°C and minced using a 10mm plate. After mincing, the temperature was 0-3°C. Water was added with mixing. A chicken emulsion comprising the following ingredients was added with mixing:

| Ingredient | % |
|---|---|
| chicken skin | 44% |
| water | 44% |
| soya isolate | 11% |
| salt | 1% |
| | 100% |

The stabiliser in accordance to Example 6 was added and mixed thoroughly. Rusk was added with mixing following by seasoning. A dry powder flavouring was preferred. The composition was allowed to dissolve in use in water which was present in the substrate in order to form an aqueous stabiliser solution in situ.

A vacuum was applied to the mixture to consolidate the structure following which the chicken mixture was chilled to -3°C and formed into shaped pieces.

A similar procedure was used for other comminuted meat products. Large particulate cores may be manufactured using a similar method.

### Example 8 - Primary Aqueous Coating Liquid

(a) The following mixture was prepared:

| Ingredient | % |
|---|---|
| modified starch (Thermflo) | 35% |
| thickener (Methocel A4M) | 25% |
| xanthan gum | 25% |
| egg albumen | 15% |
| | 100% |

The mixture was dissolved in water to form a 1% solution using a CFS Scanbrine mixer with paddle agitation. The solution was left to stand for a period of 1 hour to 24 hours to form a fully hydrated gel or viscous solution.
A pump is necessary to run the machine but after a short while bubbles may form in the gel solution in the applicator. To prevent this problem food grade anti foaming agents can be used. Polydimethylsiloxane is preferred but calcium alginate, methyl ethyl cellulose, methylphenylpolysiloxane or polyethylene glycol can be used.
(b) The solution of Example 8(a) may be used directly. Alternatively, ingredients were combined as follows:

| Ingredient | % |
|---|---|
| mixture of Example 8(a) | 0.9% |
| vegetable oil | 5% |
| iron phosphate | 3% |
| water | 91.1% |
| | 100% |

### Example 9 Secondary Aqueous Coating Liquid

(a) A secondary coating composition was prepared by mixing the following ingredients: 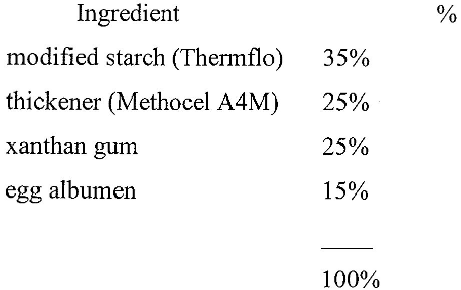 The mixture was dissolved in water to form a solution containing 1 % of the listed dry ingredients.
(b) A secondary coating liquid was prepared by mixing the following ingredients:-

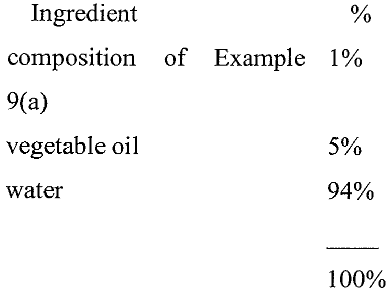

### Example 10 - Inner Farinaceous Coating

In a pre-processing stage, pieces of chicken or other substrate are cut to an appropriate size or comminuted as required. The substrate pieces are impregnated with a stabiliser composition, as described in Example 7. A forming machine was used to form the product. A conventional forming machine may be arranged to extrude chicken substrate pieces having a predetermined thickness and one or more shapes. The pieces are extruded onto a conveyor arranged to carry them to a tempura dipper containing an aqueous coating composition as described in Example 8(a) to form a pre-coated product.

The tempura coating apparatus is used to apply the primary aqueous coating. This comprises a reservoir for the primary aqueous coating composition or pre-gel. A first lower conveyor carries pieces beneath the surface of the aqueous composition. A second upper conveyor prevents the pieces from floating. This ensures complete coating of the pieces. The upper and lower conveyors are disposed in parallel spaced relation to form a channel within which the pieces are located during coating.

A second lower conveyor carries the substrate pieces out of the reservoir beneath the upper conveyor. The substrate pieces emerging from the reservoir pass under an air jet to remove excess liquid.

Following application of the primary aqueous coating a coating of crumb fines is applied using a crumb applicator. The crumb fines were made by milling crumb manufactured in accordance with the disclosure of WO 2011/001101.

The fine crumb coated substrates are then passed through a tempura applicator to apply a secondary aqueous coating followed by application of the outer crumb..The substrate pieces which have been coated with primary aqueous coating and crumb fines are passed through a bath of the secondary aqueous coating using a wire mesh conveyor, so that complete immersion of the pieces is achieved.

A first layer of heavy grist coating crumb may be applied to the secondary coated product followed by a lighter grist crumb to infill between the heavy crumb particles. Alternatively, a single outer crumb layer may be employed, particularly when using a large sized outer crumb. The crumb was made in accordance with the disclosure of WO2011/001101.

### Example 11 - Production of Microwaveable Frozen Chicken Nuggets

Following application of the first and second crumb layers the coated substrates were placed in a fryer.

Heated oil contained in an elongate reservoir was heated to a constant temperature of 180 to 188°C. Pure rapeseed oil was employed.

Parallel upper and lower conveyors were used to prevent the substrate pieces from floating during passage through the fryer.

The fried products when removed from the heated oil had an external temperature of about 180°C and a core temperature of about 90°C. The products were transferred by the conveyor into a cryogenic freezer during a period of not less than 2 minutes.

The transfer from the fryer to the freezer is arranged so that the core temperature of the product was reduced from 75°C to -30°C during a period not longer than 15 minutes

The frozen products were packaged in hermetically sealed packages. The packaging may be flushed with nitrogen dependent on the required shelf life of the product.

### Example 12.

The procedure of Example 11 was repeated with 16wt% of the crumb replaced with ethylcellulose. The resultant product had a crisper coating than the comparative example in which the ethylcellulose was omitted.

### Example 13

Example 11 was repeated with 9% of the water in the secondary aqueous coating liquid of Example 8 replaced with ethylcellulose. The chicken nuggets of Example 12 and Example 13 were prepared following the procedure described above. The fried products were assessed by a tasting panel. The expert panel found that the product with addition of ethylcellulose of Example 12 was found to have a crisper coating than the comparative product of Example 13 in which the ethylcellulose was omitted.

The frozen products were packaged in hermetically sealed packages. The packing may be flushed with nitrogen although this may not be used dependent on the required shelf life of the packaged products.

### Example 14

Example 13 was repeated except that 16% of the crumb was replaced with ethylcellulose. After frying the ethylcellulose was found to have partially dissolved in the frying oil and formed a solid deposit in the oil on cooling.

However the products with the addition of ethylcellulose were found to be crisper than those in which ethylcellulose was not used.

### Example 15

Example 13 was repeated except that 9% of the water in the in the primary coating liquid of Example 8(a) was replaced with ethylcellulose. It was found that some of the ethylcellulose had passed into the solution with the penetrating frying oil and increased the viscosity of the oil on cooling. The effect was less than when using a dry application because the functionality had leeched out to the frying oil.

Products with the addition of ethylcellulose were crisper than those without.

## Claims

1. A method of manufacture of a microwave or thermally reheatable or cookable food product comprising the step of coating the product or ingredient or a component thereof with a coating composition comprising ethylcellulose.

2. A method of as claimed in any preceding claim, wherein the product is a fried coated product which is cookable or reheatable in a microwave or thermal oven.

3. A method as claimed in any preceding claim, wherein the product is frozen or chilled for storage below 7°C.

4. A method of manufacture of a microwave or thermally reheatable or cookable food product comprising the steps of:
providing a solid or solidified substrate;
applying one or more coating compositions to the substrate to produce a coated substrate;
wherein at least one of the coating compositions comprises ethylcellulose.

5. A method according to claim 2, wherein at least one of the coating compositions that is applied to the substrate contains at least 50 wt.% particulate farinaceous component, preferably crumb.

6. A method as claimed in claim 4 or 5, wherein the production of the coated substrate comprises the successive steps of:
applying a first aqueous coating to the substrate;
applying an inner coating layer comprising ethylcellulose, a particulate farinaceous component and, optionally, one or more further edible ingredients to form an ethylcellulose coated core;
applying a second aqueous coating to the ethylcellulose coated core;
applying a coating particulate farinaceous component to form a breaded product.

7. A method according to any of claims 4 to 6, wherein the method additionally comprises the steps of frying the coated substrate and freezing the fried coated substrate.

8. A method as claimed in any preceding claim, wherein the coating composition containing ethylcellulose is applied as a boundary layer between a baked farinaceous substrate and a covering or a filling having a water activity of more than 0.8.

9. A method as claimed in claim 4, wherein the second aqueous layer is not a batter and contains less than 10wt%, preferably less than 5wt%, of flour, more preferably no flour.

10. A method of manufacture of a coated food product as claimed in any preceding claim, including the step of coating the substrate with a coating combination comprising ethylcellulose and a glyceride, wherein the coating composition is solid or semi-solid at a temperature between 0°C and 35°C.

11. A fried coated food product comprising a core of edible material and a plurality of coating layers that surround the core of edible material, wherein at least one of the coatingg layers contains ethylcellulose.

12. A coated food product as claimed in claim 12 wherein the inner coating layer comprises a farinaceous component including 5wt% to 20 wt%; preferably 6wt% to 16 wt%; more preferably 9wt% to 12wt% ethylcellulose.

13. A fried coated food product as claimed in claim 12 wherein the product contains one or more farinaceous coating layers containing a particulate farinaceous component, at least one of said farinaceous coating layers covering the ethylcellulose containing coating layer.

14. A fried coated food product as claimed in any of claims 12 or 13, comprising:
a core of edible material;
a first binding layer;
an inner coating layer comprising ethylcellulose, a particulate farinaceous component and, optionally, one or more edible ingredients applied to the substrate to form an ethylcellulose coated core;
a second binding layer;
a coating crumb.

15. A fried coated food product as claimed in any of claims 12 to 14 wherein the fried food product is obtained by a method according to any of claims 1 to 11.

16. A food product comprising:
a baked farinaceous substrate;
a covering or a filling having a water activity of more than 0.8; and
a boundary layer separating the substrate from the covering or the filling, said boundary layer containing ethylcellulose, wherein the boundary layer is a layer that contains at least 50 wt.% fat and at least 3 wt.% ethylcellulose.
